# EUROPÄISCHE PATENTSCHRIFT

(11) **EP 1 402 462 B1**
(45) Veröffentlichungstag und Bekanntmachung des Hinweises auf die Patenterteilung: **23.03.2005**
(21) Anmeldenummer: 02727304.4
(22) Anmeldetag: 18.05.2002
(51) Int. Cl.: G06K 9/20, G06K 9/68

(54) **VERFAHREN UND VORRICHTUNG ZUM AUTOMATISCHEN LESEN VON ADRESSEN IN MEHR ALS EINER SPRACHE**
METHOD AND DEVICE FOR AUTOMATICALLY READING ADDRESSES IN MORE THAN ONE LANGUAGE
PROCEDE ET DISPOSITIF DE LECTURE AUTOMATIQUE D'ADRESSES DANS PLUSIEURS LANGUES

(30) Priorität: 01.06.2001 DE 10126835
(43) Veröffentlichungstag der Anmeldung: 31.03.2004
(73) Patentinhaber: SIEMENS AKTIENGESELLSCHAFT, 80333 München (DE)
(72) Erfinder: MILETZKI, Udo, 78465 Konstanz (DE)
(86) Internationale Anmeldenummer: PCT/DE2002/001808
(87) Internationale Veröffentlichungsnummer: WO 2002/099737

(56) Entgegenhaltungen:
- US-A- 5 887 072
- US-A- 6 047 251
- SRIHARI S N ET AL: "DOCUMENT IMAGE-PROCESSING SYSTEM FOR NAME AND ADDRESS RECOGNITION" INTERNATIONAL JOURNAL OF IMAGING SYSTEMS AND TECHNOLOGY, WILEY AND SONS, NEW YORK, US, Bd. 7, Nr. 4, 21. Dezember 1996 (1996-12-21), Seiten 379-391, XP000637459 ISSN: 0899-9457
- BAIRD H S ET AL: "A family of European page readers" PATTERN RECOGNITION, 1994. VOL. 2 - CONFERENCE B: COMPUTER VISION & IMAGE PROCESSING., PROCEEDINGS OF THE 12TH IAPR INTERNATIONAL. CONFERENCE ON JERUSALEM, ISRAEL 9-13 OCT. 1994, LOS ALAMITOS, CA, USA,IEEE COMPUT. SOC, 9. Oktober 1994 (1994-10-09), Seiten 540-543, XP010216362 ISBN: 0-8186-6270-0
- WALISCHEWSKI H: "LEARNING REGIONS OF INTEREST IN POSTAL AUTOMATION" PROCEEDINGS OF THE INTERNATIONAL CONFERENCE ON DOCUMENT ANALYSIS AND RECOGNITION, XX, XX, 1999, Seiten 317-320, XP000965646
- NAKAJIMA N ET AL.: "Analysis of Address Layout on Japanese Handwritten Mail - A Hierarchical Process of Hypothesis Verification " PROC. OF THE INTERNATIONAL CONFERENCE ON PATTERN RECOGNITION ICPR'96, Bd. III, 25. - 30. August 1996, Seiten 726-731, XP002211772 Vienna, Austria
- SPITZ L: "DETERMINATION OF THE SCRIPT AND LANGUAGE CONTENT OF DOCUMENT IMAGES" IEEE TRANSACTIONS ON PATTERN ANALYSIS AND MACHINE INTELLIGENCE, IEEE INC. NEW YORK, US, Bd. 19, Nr. 3, 1. März 1997 (1997-03-01), Seiten 235-245, XP000686653 ISSN: 0162-8828
- BAIRD H S : "Anatomy of a Versatile Page Reader" PROC. OF THE IEEE, Bd. 80, Nr. 7, Juli 1992 (1992-07) - Juli 1992 (1992-07), Seiten 1059-1065, XP002211773

## Beschreibung

Die Erfindung betrifft ein Verfahren und eine Vorrichtung zum automatischen Lesen von Adressen in mehr als einer Sprache und in wenigstens zwei verschiedenen Schriften, von denen mindestens eine nichtlateinisch ist (alle westlichen Länder und eine Reihe östlicher Länder benützen für ihre europäische Sprache einheitlich lateinische Schrift ergänzt um nationale Sonderzeichen, in der Regel mit diakritischen Zeichen versehene lateinische Buchstaben).

Schriften entstanden ursprünglich in einem Sprach- bzw. Kulturraum. Später wurden Schriften von einem Sprachraum auf andere übertragen. Insbesondere alphabetische Zeichen, also Laut-kodierte Zeichen sind, für sich gesehen, sprachunabhängig. Jedoch alle Zeichenfolgen (Strings) sind bereits sprachabhängig, Zeichenfolgen, die Worte kodieren, sind die Elemente einer Sprache.

Gegenwärtig werden in der westlichen Welt Adressenleser standardmäßig eingesetzt, die die Adressen auf Sendungen automatisch lesen und oft bis zum Zustellpunkt interpretieren. Im Gegensatz dazu steht das automatische Lesen und das Interpretieren von Adressen in Sprachen mit nichtlateinischen Schriften, wie z.B. in den Regionen Osteuropa, Afrika und Asien, noch am Anfang seiner Entwicklung. Oft ist in diesen Ländern der Leseprozess, sofern er überhaupt schon automatisiert ist, auf das Lesen des Postkodes beschränkt. Lesen der vollständigen Adresse bis zum Zustellpunkt ist mit der herkömmlichen Technik nicht möglich.

Hinzu kommt, dass in diesen Ländern häufig neben der globalen Sprache Englisch, die meist für die internationale Geschäftspost verwendet wird, auch mindestens eine lokale Amtssprache verwendet wird. Das ist meist eine Zusatzsprache, es können aber auch mehrere Sprachen sein, wie z.B. in Indien. Dies macht das mehrsprachige Lesen mit mindestens einer nichtlateinischen Schrift zusätzlich notwendig.

US-A-5 887 072 offenbart ein Verfahren zum automatischen Lesen von Adressen in mehr als einer Sprache, von denen mindestens eine eine nicht-lateinische Schrift besitzt, mit den Schritten
- Lesen der Schriftzeichen in den Gebieten mit den Adressblöcken in Erkennungseinheiten für die vorgesehenen Sprachen, deren Leseergebnisse geeignet dargestellt werden,
- Ermitteln und Klassifizieren der verschiedenen Adresselemente aus den in den OCR-Zeichenerkennungseinheiten gelesenen Zeichen anhand von sprachbezogenen Syntaxregeln,
- Verifizieren der identifizierten Adresselemente mit Hilfe einer Adressdatenbasis, wobei bei Übereinstimmung der zu verifizierenden gelesenen Adresse mit einem Eintrag die Adresse akzeptiert wird.

Dieses Verfahren ist relativ aufwändig.

Der Erfindung liegt daher die Aufgabe zugrunde, ein Verfahren und eine Vorrichtung zum aufwandsarmen Lesen von Adressen in mehr als einer Sprache und in wenigstens zwei verschiedenen Schriften, von denen mindestens eine nichtlateinisch ist, zu schaffen.

Erfindungsgemäß wird die Aufgabe durch die kennzeichnenden Merkmale der unabhängigen Ansprüche 1 und 8 gelöst.

In den Gebieten mit den Adressblöcken werden die Schriftzeichen mittels OCR-Zeichenerkennungseinheiten gelesen, wobei für jede vorgesehene Sprache eine eigene OCR-Zeichenerkennungseinheit vorgesehen ist, wobei sich im günstigsten Fall die OCR-Einheiten lediglich in den angewendeten Zeichenmodellen unterscheiden, ansonsten identisch für alle Sprachen angelegt sind, also multilingual sind. Die Ausgabe der Leseergebnisse erfolgt in einer schrift- und sprachneutralen Transliterations-Repräsentation.

Nach dem ersten Auswerten der gelesenen Zeichen in einer Adressanalyseeinheit, in der anhand von sprachbezogenen Syntaxregeln die verschiedenen Adresselemente klassifiziert werden, d.h. in der bestimmt wird, ob sie z.B. vom Typ "Straße" oder "Ort" sind, werden die gelesenen und identifizierten Adresselemente mit Hilfe einer Adressdatenbasis, die zu jedem Eintrag alle relevanten sprachabhängigen Transliterationsvarianten für die vorgesehenen Sprachen enthält, verifiziert, d.h. es erfolgt eine multilinguale Adressinterpretation. Bei Übereinstimmung der zu verifizierenden gelesenen Adresse mit einer der Transliterationsvarianten eines Eintrages oder bei einer Ähnlichkeit im festgelegten Ähnlichkeitsmaß wird die Adresse akzeptiert, ansonsten wird die Adresse zurückgewiesen. Im Gegensatz zu den vorhergehenden Verarbeitungsstufen gibt es nur eine sprachunabhängige Adressinterpretation. Lediglich die Adressdatenbasis enthält verschiedene schriftund sprachabhängige Transliterationsvarianten, die wie verschiedene Schreibvarianten in ein und derselben Sprache behandelt werden. Die Schriftunterschiede werden durch die für jede Schrift eigene Zeichenerkennung wegnormiert und auf eine Schrift-neutrale Repräsentationsebene gebracht, die Ebene der Transliteration.

Vorteilhafte Ausgestaltungen der Erfindung sind in den Unteransprüchen dargestellt.

So ist es vorteilhaft, die Gebiete mit den Adressblöcken in den aufgenommenen Oberflächen mittels sprachabhängiger, aus Lernstichproben erzeugter Layoutmodelle zu ermitteln, wobei bei festgelegter Ähnlichkeit mit dem Adressblock im jeweiligen Layout das untersuchte Gebiet als Adressgebiet definiert wird. Zusätzlich erfolgt eine bildhafte Segmentierung des Adressblockes in Zeilen-, Wort- und Zeichengebiete.

Vorteilhaft ist es auch, bereits im frühen Stadium der Bildverarbeitung, also noch vor der eigentlichen Zeichenerkennung, die segmentierten Bilddaten der Adressblöcke einer Sprachentscheidungseinheit zuzuführen, in der auf der Bildebene durch Vergleiche mit sprachtypischen Merkmalssätzen eine Zuordnung zu dem Merkmalssatz mit der größten Übereinstimmung und damit zu der entsprechenden Sprache erfolgt.

Damit ergibt sich die vorteilhafte Ausgestaltung, den Adressblock zuerst nur in der OCR-Erkennungseinheit für die Sprache, die in der Sprachentscheidungseinheit ermittelt wurde, zu lesen. Wird im Laufe des Leseprozesses bis zur Adressinterpretation keine zuzuordnende Adresse gefunden, so wird der Leseprozess mit OCR-Erkennungseinheiten für weitere Sprachen in der Reihenfolge der Wahrscheinlichkeit, die vom Sprachentscheider für jede Sprache ermittelt wurde, wiederholt, bis das Leseergebnis akzeptiert wird.

Kann mit keiner der OCR-Erkennungseinheiten ein akzeptiertes Leseergebnis für die Adresse erzielt werden, so erfolgt das Lesen der als Wörter identifizierten Adressteile in einer Worterkennungseinheit, die für jede vorgesehene Sprache entsprechende Entscheidungskriterien beinhaltet.

Vorteilhaft ist es auch, bei Ähnlichkeiten der durch den Leseprozess produzierten Adresselemente mit den Referenzeintragungen der Adressdatenbasis im festgelegten Ähnlichkeitsmaß die Adresselemente entsprechend den Eintragungen zu korrigieren.

Anschließend wird die Erfindung anhand der Zeichnung näher erläutert.

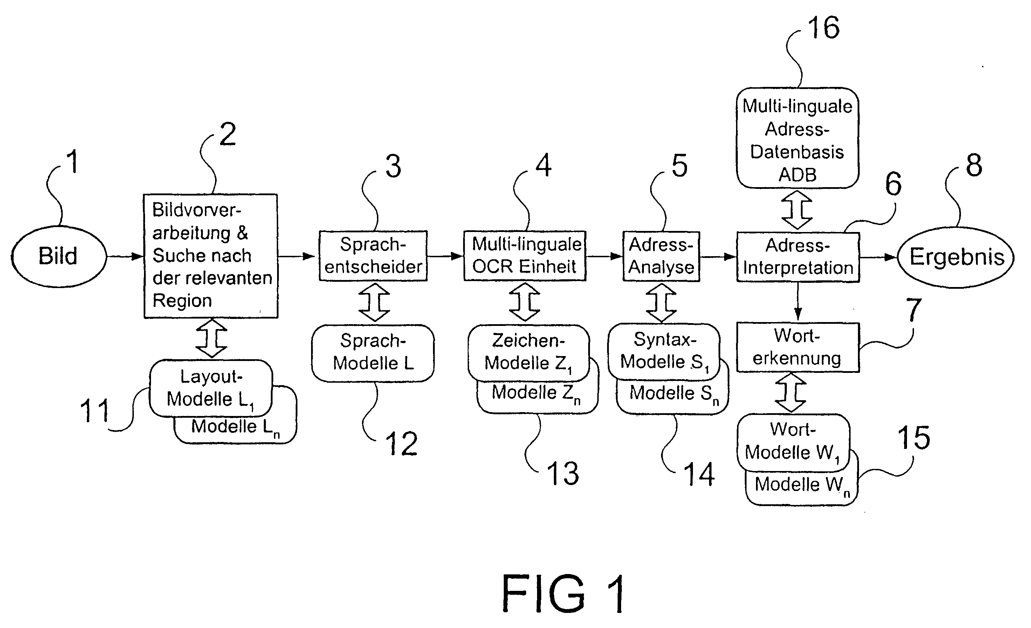

Dabei zeigen
- FIG 1: ein Blockschaltbild eines Mehrsprachen-Lese-Systems,
- FIG 2: ein Flussdiagramm zum Verfahrensablauf.

Mit einer nicht dargestellten Abtasteinrichtung erzeugte Bilder 1 werden derart in einer Bildverarbeitungseinheit 2 von störender Hintergrundinformation bereinigt, dass möglichst nur Schrift übrigbleibt. Anschließend wird in der gefilterten Bildinformation der postalisch relevante Adressblock mittels sprachabhängiger Layoutmodelle 3 geortet. Die Layoutmodelle enthalten in statistischer Form die Information über Lage und Ausdehnung der relevanten Adressblöcke in einer repräsentativen Lernstichprobe und somit auch die Information, wo der relevante Adressblock in der aktuell vorliegenden Sendung zu erwarten ist. Je nach Sprache und Schrift müssen getrennte Layout-Modelle erzeugt und angewendet werden, wie z.B. bei so unterschiedlichen Sprachen bzw. Schriften wie Englisch bzw. Lateinische Schrift, Arabisch bzw. Arabische Schrift oder Koreanisch bzw. Hangul-Schrift. Dahingegen sind die Lateinischen Schriften so ähnlich, dass in der Regel nur ein Layout-Modell für die europäische Schriftgruppe Lateinisch-Griechisch-Kyrillisch gebraucht wird.

Sämtliche Blöcke werden entsprechend ihrer Lage auf der abgetasteten Oberfläche bzw. ihrer Relation zu Nachbarblöcken entsprechend den Erfahrungswerten aus den Layout-Modellen gewichtet.

Der Block mit dem höchsten Gewicht stellt mit größter Wahrscheinlichkeit den gesuchten Adressblock dar. Bei mehreren Layout-Modellen müssen die jeweils maximal bewerteten Blöcke je Sprache bzw. Schrift als potentielle Blöcke weiterverarbeitet werden. Zusätzlich werden die Adressblöcke nach bildhaften Eigenschaften in Zeilen und Zeichenabschnitte segmentiert.

Eine nachfolgende Sprachentscheidungseinheit 4 unterwirft die angebotenen segmentierten Bilddaten des Adressblocks einer auf die Sprache bzw. Schrift zugeschnittenen Analyse noch bevor der Text erkannt wird, rein auf der Basis von bildhaften Merkmalen. Ein sprachabhängiger Merkmalssatz aus einer kleinen Anzahl von Merkmalen ermittelt, ob ein angebotener Block der einen oder anderen Sprache zugehört. Im Falle Englisch und Arabisch sind das unter anderem statistisch erfasste Aussagen über Links- oder Rechtsbündigkeit bzw. Zentriertheit, z.B. englische Ziel-Adressblöcke sind nie rechtsbündig oder selten zentriert, arabische sind dagegen meist rechtsbündig, gelegentlich zentriert, und nie linksbündig.
Andere Merkmale sind z.B. die Häufigkeit, die Dichte der diakritischen Punkte bzw. Unterlängen unter der Basislinie einer Textzeile.
Unterlängen z.B. kommen in Englisch/Lateinisch relativ selten vor (jgpy), im Arabischen dagegen häufig, Punkte unter der Basislinie kommen in der Lateinischen Schrift theoretisch gar nicht vor, dagegen im Arabischen häufig (ba, ya), Punkte über der Zeile kommen im Englischen bzw. in der Lateinischen Schrift selten selten vor (ij), dagegen im Arabischen häufig (ta, tha, kha, dal, zayy, shin, dad, ayn, ghayn, fa, qaf, nun).

Nachdem der Prozess der Sprachentscheidung durchgeführt worden ist und die mutmaßliche Sprache Lᵢ feststeht, wird eine auf diese Sprache spezialisierte OCR-Zeichenerkennungseinheit 5 von mehreren auf jeweils eine Sprache bzw. deren Schrift zugeschnittenen OCR-Zeichenerkennungseinheiten 5 aufgerufen. Diese liefert zu den angebotenen Zeichen- und Wortsegmenten die entsprechenden Bewertungen in Form von Zeichen-/Worterkennungsvorschlägen plus zugehörigen Glaubwürdigkeitswerten zurück.

Diese Ergebnisse werden in einer sich anschließenden Adressanalyseeinheit 6 einer Überprüfung der sprachabhängigen Adress-Syntax unterworfen.

Dabei werden die Adresselemente ermittelt und unter Verwendung der Syntaxmodelle - 11 - klassifiziert. Dies erfolgt u.a. mit Hilfe einzelner Schlüsselwörter oder Bezeichner wie "Straße", "Nummer", "Postfachnummer" etc., die in der Adresse gesucht werden. Es wird also die Hierarchie der Adresselemente wie <Staat>, <Stadt>, <Straße>, <Postfachnummer> etc. ausfindig gemacht.

In der nachfolgenden Stufe der Verarbeitung, der Adressinterpretationseinheit 7 für die letzte Stufe der Verarbeitung wird die Adresse mittels einer Adressdatenbasis verifiziert, d.h. bestätigt, korrigiert oder rejektiert.

Im Gegensatz zu den vorhergehenden Verarbeitungsstufen gibt es bei der Adressinterpretation nur eine sprach-unabhängige Adressinterpretation mit einer Adressdatenbasis. Diese Adressdatenbasis enthält pro Eintrag verschiedene sprachabhängige Varianten, sogenannte Aliase. Diese werden wie Schreibvarianten in ein und derselben Sprache behandelt: Die Schriftunterschiede werden durch die Multilinguale OCR-Erkennung - eine eigene OCR-Erkennungsein-heit 5 je Sprache - wegnormiert und auf eine sprachneutrale Repräsentationsebene gebracht: die Ebene der Transliteration.

Z.B. erscheint die Hauptstadt von Griechenland als englische Variante ATHENS, als deutsche Variante ATHEN, als französische Variante ATHÈNE, uns als griechische Variante ATINAI, einer buchstabenweisen Umsetzung oder Transliteration des ursprünglichen griechischen Textes: Aθτνατ .

Zur Adressinterpretation werden die einzelnen relevanten Adresselemente in der nichtlingualen Adressdatenbasis - 12 - "nachgeschlagen" , d.h. ein Zugriff auf identische bzw. nächstähnliche Einträge gemacht. Findet sich der Zeichenstring exakt wieder, wird er als richtig akzeptiert. Findet sich der identische Zeichenstring nicht, dafür aber genau ein ähnlicher String und kein weiterer Konkurrenzstring in der Nähe, d.h. ist z.B. der Levenshtein-Abstand zum nächst ähnlichen Eintrag größer als eine vorgesehene Akzeptanzschwelle, ist also mit anderen Worten der String sicher genug erkannt, wird er als Ergebnis ausgegeben. In allen anderen Fällen wird er rejektiert. Existiert ein Postkode, so wird dieser mit den entsprechenden Adressteilen korreliert. Nur die Adressen, deren Postkode nicht im Widerspruch zur Adresse steht, werden dann als "richtig gelesen" akzeptiert.

Ist das Ergebnis der Adressinterpretation immer noch negativ, - das ist in der Regel bei gebundener Handschrift und bei zusammenhängender Maschinenschrift der Fall, also immer dann, wenn der Einzelzeichensegmention- und Klassifizierprozess versagt - so werden die Adresselemente in einer Worterkennungseinheit 8 mit sprachbezogenen Entscheidungskriterien gelesen und mit den Leseergebnissen erfolgt eine nochmalige Adressinterpretation.

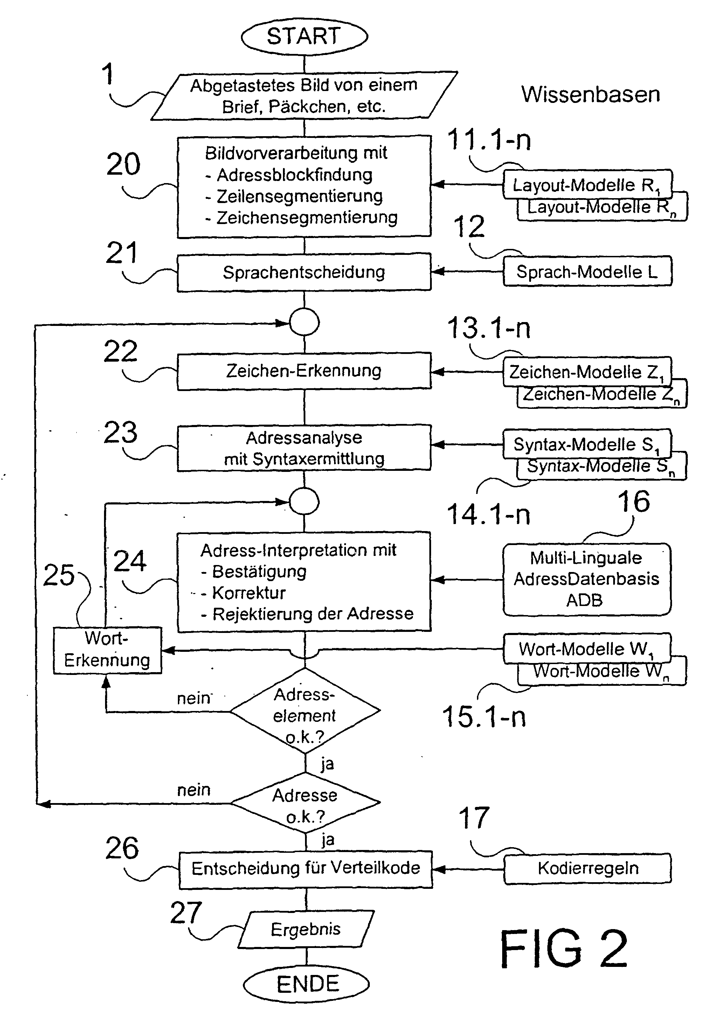

Hat die Sprachentscheidungseinheit 4 aufgrund der Bildmerkmale eine Entscheidung getroffen, so ist sie nur vorläufig, sie ist zwar meistens richtig (> 90%), kann aber auch falsch sein. Aus diesem Grund ist ein Rücksprung vom Ende der Verarbeitungskette vorgesehen, der diese Entscheidung aufgrund "höheren Wissens" revidieren kann, z.B. die Adressanalyse findet vorwiegend schlecht erkannte Schriftzeichen vor, die bei dem nächsten Versuch weiterer Interpretation keinen Sinn ergeben. In diesem Fall wird der nächste Sprachkanal 5 mit den entsprechenden Zeichenmodellen - 10 - bemüht. In der FIG 2 wird der Verfahrensablauf noch einmal kurz und übersichtlich beschrieben.

Nachdem die entsprechende Oberfläche einer Sendung, z.B. eines Briefes, eines Päckchens, mit Hilfe eines Scanners aufgenommen wurde, liegt ein abgespeichertes Bild mit einer Adresse vor 10. In der anschließenden Verarbeitungsstufe 20 wird das Bild bearbeitet, d.h. in einer Vorverarbeitung werden störende Hintergrundinformationen beseitigt und das Gebiet mit dem Adressblock wird mit Hilfe von sprachbezogenen Layoutmodellen 11.1 bis 11.n ermittelt. Dabei wird jedes Layoutmodell mit dem Bild verglichen. Ist eine Übereinstimmung oder eine Ähnlichkeit im festgelegten Ähnlichkeitsmaß zu verzeichnen, so wird der Adressblock zugeordnet. Zusätzlich erfolgt in dieser Verfahrensstufe 20 noch eine Zeilen und Zeichensegmentierung des Adressblockes auf der Bildebene. Danach wird durch bildhafte Vergleiche der Adressblöcke, -teile und - zeichen mit entsprechenden Sprachmodellen 12.1 bis 12.n wie schon beschrieben das Modell mit der größten Übereinstimmung ermittelt, wodurch die Entscheidung über die Sprache getroffen wird 21. Damit wird die OCR-Zeichenerkennungseinheit für diese Sprache aktiviert und mittels des dazugehörenden Zeichensatzmodells 13.1, 13.2, ..., 13.n erfolgt die Zeichenerkennung 22.

Die verschiedenen OCR-Zeichenerkennungseinheiten können auch aus nur einer Zentraleinheit mit verschiedenen Zeichensatzmodellen bestehen, wobei entsprechend der gewählten Sprache das dazugehörende Zeichensatzmodell aktiviert wird.

In der sich anschließenden Adressanalyse 23 werden die gelesenen Zeichen mit Hilfe von Syntax-Modellen 14.1 bis 14.n klassifiziert. Diese Modelle sind ebenfalls sprachbezogen, d.h. die Analyse wird mit den Syntax-Modellen für die ausgewählte Sprache durchgeführt.

Ist die Adressanalyse 23 erfolgreich, so werden in einer Adressinterpretation 24 die Adresselemente anhand der Adressdatenbasis mit den sprachabhängigen Transliterationsvarianten verifiziert. Bei Übereinstimmung oder bei Ähnlichkeit im festgelegten Ähnlichkeitsmaß werden die Adresselemente und die Adresse akzeptiert, wobei bei Ähnlichkeiten die Adresselemente gemäß der Einträge der Datenbasis korrigiert werden. Dabei kann es geschehen, dass Adresselemente mit der Einzelzeichenerkennung nicht aufgelöst werden konnten. In diesem Fall wird die Worterkennung 25 aufgerufen. Sie gibt zu jedem Wortbild die nach Wahrscheinlichkeit sortierten Wortbedeutungen zurück. Die Worterkennung wird sooft aufgerufen, bis alle Adresselemente erkannt wurden, bzw. alle Aufträge abgearbeitet sind. Wurde der Adressinterpretationsprozess trotzdem erfolglos durchgeführt, wird zu Sprachentscheidungen zurückgesprungen und der Prozess mit der nächst wahrscheinlichen Sprache wiederholt.

Abschließend werden für die akzeptierten Adressen die Verteilkodes nach Kodierregeln 15.1, die von den Versanddiensten festgelegt werden, ermittelt 16.

## Patentansprüche

1. Verfahren zum automatischen Lesen von Adressen in mehr als einer Sprache und in wenigstens zwei verschiedenen Schriften, von denen mindestens eine nicht lateinisch ist,
mit den Schritten:
- Lesen der Schriftzeichen in den Gebieten mit den Adressblöcken in OCR-Zeichenerkennungseinheiten für die vorgesehenen Sprachen, deren Leseergebnisse in einer schrift- und sprachneutralen Transliterations-Repräsentation dargestellt werden (13),
- Ermitteln und Klassifizieren der verschiedenen Adresselemente aus den in den OCR-Zeichenerkennungseinheiten gelesenen Zeichen anhand von sprachbezogenen Syntax-Regeln (14),
- Verifizieren (15) der identifizierten Adresselemente mit Hilfe einer einzigen Adressdatenbasis, die zu jedem Eintrag verschiedene schrift- und sprachabhängige Transliterationsvarianten enthält, wobei bei Übereinstimmung der zu verifizierenden gelesenen Adresse mit einer der Transliterationsvarianten eines Eintrages oder einer Ähnlichkeit im festgelegten Ähnlichkeitsmaß die Adresse akzeptiert wird.

2. Verfahren nach Anspruch 1, **dadurch gekennzeichnet, dass** in den aufgenommenen Oberflächen mit den Adressen die Gebiete mit den Adressblöcken mittels sprachbezogener, aus Lernstichproben erzeugter Layoutmodelle ermittelt werden und eine bildhafte Segmentierung der Adressblöcke erfolgt (11).

3. Verfahren nach Anspruch 2, **dadurch gekennzeichnet, dass** die segmentierten Bilddaten der Adressblöcke einer Sprachentscheidungseinheit (4) zugeführt werden, in der auf der Bildebene durch Vergleiche mit sprachtypischen Merkmalssätzen eine Zuordnung zu dem Merkmalssatz mit der größten Übereinstimmung und damit zu der entsprechenden Sprache erfolgt (12).

4. Verfahren nach Anspruch 3, **dadurch gekennzeichnet, dass** der jeweilige Adressblock zuerst in der OCR-Erkennungseinheit für die in der Sprachentscheidungseinheit ermittelten Sprache gelesen wird und bei einem nicht akzeptierten Leseergebnis dieser Adresse der Lesevorgang in OCR-Erkennungseinheiten für weitere Sprachen wiederholt wird, bis das Leseergebnis akzeptiert wird.

5. Verfahren nach einem der Ansprüche 1 bis 4, **dadurch gekennzeichnet, dass** bei nicht akzeptierten Leseergebnissen der OCR-Zeichenerkennungseinheiten als Wörter identifizierte Adressteile in einer Worterkennungseinheit gelesen werden, die für jede vorgesehene Sprache entsprechende Entscheidungskriterien beinhaltet und deren Leseergebnisse ebenfalls mit Hilfe der Adressdatenbasis verifiziert werden.

6. Verfahren nach Anspruch 4, **dadurch gekennzeichnet, dass** der Lesevorgang mit OCR-Zeichenerkennungseinheiten für weitere Sprachen schon wiederholt wird, wenn mit der Adressanalyse der Leseergebnisse der aktivierten OCR-Zeichenerkennungseinheit auf der Basis der Syntaxregeln für die aktuelle Sprache die Adresselemente nicht klassifiziert werden können.

7. Verfahren nach Anspruch 1, **dadurch gekennzeichnet, dass** bei Ähnlichkeiten im festgelegten Ähnlichkeitsmaß der Adresselemente mit den Eintragungen der Adressdatenbasis die Adresselemente entsprechend den Eintragungen korrigiert werden.

8. Vorrichtung zum automatischen Lesen von Adressen in mehr als einer Sprache und in wenigstens zwei verschiedenen Schriften, von denen mindestens eine nicht lateinisch ist ausgestaltet mit
- für jede vorgesehene Sprache einer OCR-Zeichenerkennungseinheit (5) zum Lesen der Schriftzeichen in den Gebieten mit den Adressblöcken, deren Leseergebnisse in einer schrift - und sprachneutralen Transliterations-Repräsentation dargestellt werden,
- einer Adressanalyseeinheit (6) zum Auswerten der in den OCR-Zeichenerkennungseinheiten gelesenen Zeichen, in der anhand von sprachbezogenen Syntax-Regeln die verschiedenen Adresselemente ermittelt und klassifiziert werden,
- einer Adressinterpretationseinheit (7) zum Verifizieren der identifizierten Adresselemente mit Hilfe einer Adressdatenbasis, die zu jedem Eintrag verschiedene schrift - und sprachabhängige Transliterationsvarianten enthält, wobei bei Übereinstimmung der zu verifizierenden gelesenen Adresse mit einer der Transliterationsvarianten eines Eintrages oder einer Ähnlichkeit im festgelegten Ähnlichkeitsmaß die Adresse akzeptiert wird.

9. Vorrichtung nach Anspruch 8, **gekennzeichnet durch** eine Einrichtung (2) zum Ermitteln der Gebiete mit den Adressblöcken in den aufgenommenen Oberflächen mittels sprachbezogener, aus Lernstichproben erzeugter Layoutmodelle und zur bildhaften Segmentierung der Adressblöcke.

10. Vorrichtung nach Anspruch 9, **gekennzeichnet durch** eine Sprachentscheidungseinheit (4), der die segmentierten Bilddaten der Adressblöcke zugeführt werden und in der auf der Bildebene **durch** Vergleiche mit sprachtypischen Merkmalssätzen eine Zuordnung zu dem Merkmalssatz mit der größten Übereinstimmung und damit zu der entsprechenden Sprache erfolgt.

11. Vorrichtung nach Anspruch 10, **gekennzeichnet durch** eine Worterkennungseinheit (8) zum Lesen von als Wörter identifizierten Adressteilen im Falle nicht akzeptierter Leseergebnisse der OCR-Zeichenerkennungseinheiten (5), die für jede vorgesehene Sprache entsprechende Entscheidungskriterien beinhaltet und deren Leseergebnisse ebenfalls der Adressinterpretationseinheit (7) zugeführt werden.

## Claims

1. Method for automatically reading addresses in more than one language and in at least two different scripts, at least one of which is a non-Latin script, having the steps:
- in the regions with the address blocks, the characters are read in OCR character recognition units for the anticipated languages, the reading results of which are depicted (13) in a script- and language-neutral transliteration representation,
- the various address elements comprising the characters which are read in the OCR character recognition units are determined and classified with reference to language-related syntax rules (14),
- the identified address elements are verified (15) using a single address database which contains different, script- and language-dependent transliteration variants for each entry, the address being accepted when the read address which is to be verified corresponds to one of the transliteration variants of an entry or when there is a similarity within the defined degree of similarity.

2. Method according to Claim 1, **characterized in that** the regions with the address blocks are determined in the recorded surfaces with the addresses by means of language-related layout models which are generated from learning samples, and the address blocks are segmented pictorially (11).

3. Method according to Claim 2, **characterized in that** the segmented image data of the address blocks are fed to a language decision unit (4) in which an assignment is made (12) to the feature set with the greatest correspondence, and thus to the corresponding language, on the image level by comparisons with language-typical feature sets.

4. Method according to Claim 3, **characterized in that** the respective address block is firstly read in the OCR recognition unit for the language which is determined in the language decision unit, and when a reading result of this address is not accepted the reading process is repeated in OCR recognition units for further languages until the reading result is accepted.

5. Method according to one of Claims 1 to 4, **characterized in that** when reading results of the OCR character recognition units are not accepted, parts of the address which are identified as words are read in a word recognition unit which contains corresponding decision criteria for each anticipated language and whose language results are also verified using the address database.

6. Method according to Claim 4, **characterized in that** the reading process with OCR character recognition units is already repeated for other languages if the address elements cannot be classified using the address analysis of the reading results of the activated OCR character recognition unit on the basis of the syntax rules for the current language.

7. Method according to Claim 1, **characterized in that** when there are similarities within the defined degree of similarity between the address elements and the entries in the address database, the address elements are corrected in accordance with the entries.

8. Device for automatically reading addresses in more than one language and in at least two different scripts, at least one of which is a non-Latin script, equipped with
- one OCR character recognition unit (5) for each anticipated language for reading the characters in the regions with the address blocks the reading results of which are depicted in a script- and language-neutral translation representation,
- an address analysis unit (6) for evaluating the characters which are read in the OCR character recognition unit, in which the various address elements are determined and classified by reference to language-related syntax rules,
- an address interpretation unit (7) for verifying the identified address elements using an address database which contains different, script- and language-dependent transliteration variants for each entry, the address being accepted when the read address which is to be verified corresponds to one of the transliteration variants of an entry or when there is a similarity within the defined degree of similarity.

9. Device according to Claim 8, **characterized by** an apparatus (2) for determining the regions with the address blocks in the recorded surfaces by means of language-related layout models which are generated from learning samples, and for the pictorial segmentation of the address blocks.

10. Device according to Claim 9, **characterized by** a language decision unit (4) to which the segmented image data of the address blocks are fed and in which an assignment is made to the feature set with the greatest degree of correspondence, and thus to the corresponding language, on the image level by comparisons with language-typical feature sets.

11. Device according to Claim 10, **characterized by** a word recognition unit (8) for reading parts of the address which are identified as words, in the case of reading results of the OCR character recognition units (5) which are not accepted, which contains corresponding decision criteria for each anticipated language and whose reading results are also fed to the address interpretation unit (7).

## Revendications

1. Procédé de lecture automatique d'adresses dans plus d'une langue et dans au moins deux écritures différentes, dont au moins l'une n'est pas latine, avec les étapes suivantes :
- lecture des caractères écrits dans les zones comportant les blocs d'adresse dans des unités de reconnaissance de caractères OCR pour les langues prévues, les résultats de lecture de ces unités étant présentés (13) dans une représentation translittérale neutre quant à l'écriture et quant à la langue,
- détermination et classification (14) des différents éléments d'adresse à partir des caractères lus dans les unités de reconnaissance de caractères OCR à l'aide de règles syntaxiques se rapportant à la langue,
- vérification (15) des éléments d'adresse identifiés à l'aide d'une seule base de données d'adresse qui contient pour chaque enregistrement différentes variantes translittérales dépendantes de l'écriture et de la langue sachant que, en cas d'égalité entre l'adresse lue à vérifier et l'une des variantes translittérales d'un enregistrement ou en cas de similitude dans une certaine mesure de similitude fixée, l'adresse est acceptée.

2. Procédé selon la revendication 1, **caractérisé par le fait que**, dans les surfaces analysées comportant les adresses, on détermine les zones comportant les blocs d'adresse au moyen de modèles d'implantation se rapportant à la langue et produits à partir d'échantillons d'apprentissage et on effectue une segmentation imagée des blocs d'adresse (11).

3. Procédé selon la revendication 2, **caractérisé par le fait qu'**on envoie les données d'image segmentées des blocs d'adresse à une unité de décision de langue (4) dans laquelle on effectue (12) au niveau de l'image, par comparaison avec des ensembles de caractéristiques typiques de la langue, une association à l'ensemble de caractéristiques présentant le plus de coïncidences et donc à la langue correspondante.

4. Procédé selon la revendication 3, **caractérisé par le fait qu'**on lit d'abord le bloc d'adresse respectif dans l'unité de reconnaissance OCR pour la langue déterminée dans l'unité de décision de langue et, si le résultat de lecture de cette adresse n'est pas accepté, on répète l'opération de lecture dans des unités de reconnaissance OCR pour d'autres langues jusqu'à ce que le résultat de lecture soit accepté.

5. Procédé selon l'une des revendications 1 à 4, **caractérisé par le fait que**, si les résultats de lecture des unités de reconnaissance de caractères OCR ne sont pas acceptés, on lit des parties d'adresse identifiées comme des mots dans une unité de reconnaissance de mots qui contient pour chaque langue prévue des critères de décision correspondants et dont les résultats de lecture sont également vérifiés à l'aide de la base de données d'adresses.

6. Procédé selon la revendication 4, **caractérisé par le fait qu'**on répète déjà l'opération de lecture avec des unités de reconnaissance de caractères OCR pour d'autres langues lorsque l'analyse d'adresse des résultats de lecture de l'unité de reconnaissance de caractères OCR activée ne permet pas de classifier les éléments d'adresse sur la base des règles syntaxiques pour la langue actuelle.

7. Procédé selon la revendication 1, **caractérisé par le fait que**, en cas de similitudes dans la mesure de similitude fixée entre les éléments d'adresse et les enregistrements de la base de données d'adresses, on corrige les éléments d'adresse suivant les enregistrements.

8. Dispositif de lecture automatique d'adresses dans plus d'une langue et dans au moins deux écritures différentes, dont au moins l'une n'est pas latine, conçu avec
- pour chaque langue prévue, une unité de reconnaissance de caractères OCR (5) qui est destinée à lire les caractères écrits dans les zones comportant les blocs d'adresse et dont les résultats de lecture sont présentés dans une représentation translittérale neutre quant à l'écriture et quant à la langue,
- une unité d'analyse d'adresse (6) qui est destinée à évaluer les caractères lus dans les unités de reconnaissance de caractères OCR et dans laquelle les différents éléments d'adresse sont déterminés et classifiés à l'aide de règles syntaxiques se rapportant à la langue,
- une unité d'interprétation d'adresse (7) qui est destinée à vérifier les éléments d'adresse identifiés à l'aide d'une base de données d'adresse contenant pour chaque enregistrement différentes variantes translittérales dépendantes de l'écriture et de la langue sachant que, en cas d'égalité entre l'adresse lue à vérifier et l'une des variantes translittérales d'un enregistrement ou en cas de similitude dans une certaine mesure de similitude fixée, l'adresse est acceptée.

9. Dispositif selon la revendication 8, **caractérisé par** un dispositif (2) pour déterminer les zones comportant les blocs d'adresse dans les surfaces analysées au moyen de modèles d'implantation se rapportant à la langue et produits à partir d'échantillons d'apprentissage et pour effectuer une segmentation imagée des blocs d'adresse.

10. Dispositif selon la revendication 9, **caractérisé par** une unité de décision de langue (4) à laquelle les données d'image segmentées des blocs d'adresse sont envoyées et dans laquelle on effectue au niveau de l'image, par comparaison avec des ensembles de caractéristiques typiques de la langue, une association à l'ensemble de caractéristiques présentant le plus de coïncidences et donc à la langue correspondante.

11. Dispositif selon la revendication 10, **caractérisé par** une unité de reconnaissance de mots (8) qui est destinée à lire des parties d'adresse identifiées comme des mots si les résultats de lecture des unités de reconnaissance de caractères OCR (5) ne sont pas acceptés, qui contient pour chaque langue prévue des critères de décision correspondants et dont les résultats de lecture sont également envoyés à l'unité d'interprétation d'adresse (7).
